# EUROPÄISCHE PATENTSCHRIFT

(11) **EP 2 291 893 B1**
(45) Veröffentlichungstag und Bekanntmachung des Hinweises auf die Patenterteilung: **08.02.2017**
(21) Anmeldenummer: 09765233.3
(22) Anmeldetag: 27.04.2009
(51) Int. Cl.: H02H 3/04, H02H 1/00, H02H 1/06, H02H 3/33

(54) **FEHLERSTROMSCHUTZSCHALTER**
FAULT CURRENT CIRCUIT BREAKER
DISJONCTEUR DIFFERENTIEL

(30) Priorität: 18.06.2008 AT 9772008
(43) Veröffentlichungstag der Anmeldung: 09.03.2011
(73) Patentinhaber: Eaton Industries (Austria) GmbH, 3943 Schrems (AT)
(72) Erfinder: MEISEL, Rainer, A-1210 Wien (AT); RITZINGER, Georg, A-3424 Wolfpassing (AT)
(74) Vertreter: Eaton IP Group EMEA
(86) Internationale Anmeldenummer: PCT/AT2009/000168
(87) Internationale Veröffentlichungsnummer: WO 2009/152539

(56) Entgegenhaltungen:
- EP-A- 0 905 847
- DE-A1- 2 555 221
- DE-A1- 19 723 130
- DE-A1- 19 735 412
- DE-A1- 19 940 343
- GB-A- 2 268 011

## Beschreibung

Die Erfindung betrifft einen Fehlerstromschutzschalter gemäß dem Oberbegriff des Patentanspruches 1.

Die Druckschrift DE 25 55 221 offenbart einen Fehlerstromschutzschalter.

Es sind Fehlerstromschutzschalter zum Schutz von Menschen und Elektroinstallationsanordnungen vor gefährlichen Fehlerströmen bekannt, welche beim Auftreten gefährlicher Fehlerströme ein elektrisches Netz abschalten.

Nachteilig daran ist, dass eine derartige Abschaltung eines elektrischen Netzes durch den Nutzer meist unerwünscht ist, bzw. in vielen Fällen hohe Kosten verursacht. Etwa bei der Versorgung bzw. Steuerung von Prozessen, welche nicht unterbrochen werden dürfen, etwa bei der Durchführung komplexer technischer Prozesse, oder beispielsweise bei der Herstellung technischer Gläser, bei welcher kontrollierte Abkühlzeiten in der Größenordnung einiger Monate keine Seltenheit sind. Eine Unterbrechung der Stromversorgung während eines derartigen Prozesses verursacht hohe Kosten und eine unverantwortbare Rohstoffverschwendung. Ein weiteres Problem stellt vor allem das Unterbrechen der Stromversorgung bei EDV-Anwendungen dar, was zu einem Datenverlust bis hin zu einer Gefährdung von Menschenleben führen kann.

Aufgabe der Erfindung ist es daher einen Fehlerstromschutzschalter der eingangs genannten Art anzugeben, mit welchem die genannten Nachteile vermieden werden können, und mit welchem unerwartete Abschaltungen eines zu schützenden Netzes reduziert werden können. Erfindungsgemäß wird dies durch die Merkmale des Patentanspruches 1 erreicht.

Dadurch können Todzeiten von Maschinen verringert werden, und damit anfallende Kosten reduziert werden. Dadurch wird ein Anwender über den momentan anliegenden Fehlerstrompegel informiert, und kann gegebenenfalls selbst elektrische Verbraucher deaktivieren bzw. vom Netz trennen, um einer potentiellen Stromkreisabschaltung durch den Fehlerstromschutzschalter zuvor zu kommen. Dadurch kann sichergestellt werden, dass der betreffende Fehlerstromschutzschalter auch bei einem Ausfall der Signalmittel im Sinne eines Kurzschlusses weiterhin als Fehlerstromschutzschalter voll funktionstauglich ist, und der Schutz von Menschen und Anlagen weiterhin gewährleistet ist. Dadurch kann vor allem bei kritischen EDV-Anwendungen oftmals ein Datenverlust aufgrund einer Abschaltung des Netzes durch den Fehlerstromschutzschalter verhindert werden, da bei einem sich anbahnenden Fehlerstrom Daten gesichert werden können, bzw. potentiell Ableitströme erzeugende Geräte deaktiviert werden können.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossene Zeichnung, in welcher eine lediglich bevorzugte Ausführungsform eines erfindungsgemäßen Fehlerstromschutzschalters beispielhaft als schematisches Blockschaltbild dargestellt ist, näher beschrieben.

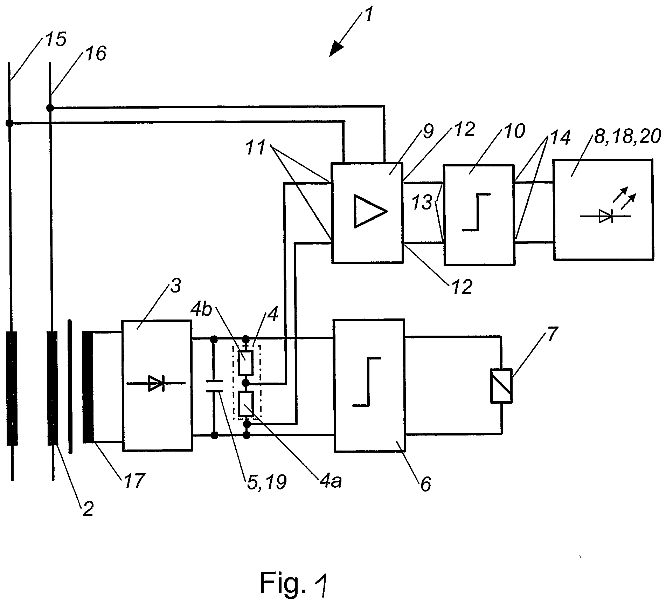

Die einzige Figur zeigt einen Fehlerstromschutzschalter 1, umfassend wenigstens einen Summenstromwandler 2 durch welchen wenigstens ein erster Leiter 15 und ein zweiter Leiter 16 eines zu schützenden Netzes geführt sind, wobei auf dem Summenstromwandler 2 wenigstens eine Sekundärwicklung 17 angeordnet ist, wobei die Sekundärwicklung 17 mit wenigstens einem Energiespeicherelement 5 wenigstens mittelbar wirkverbunden ist, wobei wenigstens ein Entladewiderstand 4 zu dem Energiespeicherelement 5 parallel geschaltet ist, wobei der Fehlerstromschutzschalter 1 einen Auslöser 7 aufweist, welcher mit Trennkontakten in dem wenigstens einen ersten Leiter 15 und dem wenigstens einen zweiten Leiter 16 wirkverbunden ist, wobei der wenigstens eine Entladewiderstand 4 durch einen ersten Teilwiderstand 4a und wenigstens einem zu diesem seriell geschalteten zweiten Teilwiderstand 4b gebildet ist, und dass wenigstens ein erstes elektrisches Signalmittel 20 wenigstens mittelbar mit dem ersten Teilwiderstand 4a wirkverbunden ist.

Dadurch können Todzeiten von Maschinen verringert werden, und damit anfallende Kosten reduziert werden. Dadurch wird ein Anwender über den momentan anliegenden Fehlerstrompegel informiert, und kann gegebenenfalls selbst elektrische Verbraucher deaktivieren bzw. vom Netz trennen, um einer potentiellen Stromkreisabschaltung durch den Fehlerstromschutzschalter 1 zuvor zu kommen. Dadurch kann sichergestellt werden, dass der betreffende Fehlerstromschutzschalter 1 auch bei einem Ausfall der Signalmittel 20 im Sinne eines Kurzschlusses weiterhin als Fehlerstromschutzschalter 1 voll funktionstauglich ist, und der Schutz von Menschen und Anlagen weiterhin gewährleistet ist. Dadurch kann vor allem bei kritischen EDV-Anwendungen oftmals ein Datenverlust aufgrund einer Abschaltung des Netzes durch den Fehlerstromschutzschalter 1 verhindert werden, da bei einem sich anbahnenden Fehlerstrom Daten gesichert werden können, bzw. potentiell Ableitströme erzeugende Geräte deaktiviert werden können.

Durch die Mittel der gegenständlichen Erfindung kann sichergestellt werden, dass bei einem Ausfall der Signalmittel 20 bzw. einem Ausfall gegebenenfalls weiterer zum Betrieb der Signalmittel 20 notwendiger Baugruppen, keine niederohmige Überbrückung des wenigstens einen Entladewiderstands 4 gebildet wird. Der Entladewiderstand 4 beeinflusst die Funktion des Fehlerstromschutzschalters 1 unmittelbar, indem dieser zusammen mit dem parallel zu diesem angeordneten Energiespeicherelement 5 die Auslösecharakteristik, insbesondere den Auslösegrenzwert sowie das frequenzabhängige Verhalten des Auslösegrenzwertes, des Fehlerstromschutzschalters 1 beeinflusst, insbesondere bestimmt. Durch die Mittel der gegenständlichen Erfindung kann, auch bei einem Totalausfall der Signalmittel 20 in Form eines Kurzschlusses die Funktion des Fehlerstromschutzschalters 1 innerhalb vorgebbarer Grenzwerte, welche innerhalb der gesetzlichen Vorgaben liegen, sichergestellt werden. Beim Auftreten eines Fehlerstromes, welcher für sich nicht bzw. noch nicht ausreichend groß ist, um ein Auslösen des Fehlerstromschutzschalters 1 zu verursachen, wird das Signalmittel 20 aktiviert, beispielsweise leuchtet der erste elektrische Leuchtkörper 8 auf, und signalisiert derart das Vorhandensein eines Fehlerstromes. Dadurch kann ein Benutzer bereits vor dem Auslösen des Fehlerstromschutzschalters 1 tätig werden, indem etwa Geräte vom Netz genommen werden, und/oder sensible Prozesse gesichert bzw. beendet werden können. Weiters wird durch einen erfindungsgemäßen Fehlerstromschutzschalter 1 die Fehlersuche deutlich vereinfacht, da nach Aktivierung eines Geräts sofort erkannt werden kann, ob ein Fehlerstrom auftritt, auch wenn dieser (noch) zu gering ist um eine Auslösung des Fehlerstromschutzschalters 1 zu verursachen.

Die einzige Figur zeigt eine lediglich besonders bevorzugte Ausführungsform eines erfindungsgemäßen Fehlerstromschutzschalters 1 zur, vorzugsweise netzspannungsunabhängigen, Fehlerstromauslösung als schematische Darstellung der funktionellen Baugruppen und deren schaltungstechnische Verbindungen. Der bei gegenständlicher Erfindung durch den ersten und zweiten Teilwiderstand 4a, 4b gebildete Entladewiderstand 4 ist in den einzigen Figur als strichpunktierter Ersatzwiderstand dargestellt. Ein derartiger Fehlerstromschutzschalter 1 ist zum Schutz von Anlagen und Menschen vorgesehen, wobei im Falle eines auftretenden gefährlichen Fehlerstromes die an den Fehlerstromschutzschalter 1 angeschlossenen Verbraucher von einem Versorgungsnetz, umfassend den ersten Leiter 15 und den zweiten Leiter 16, getrennt werden. Der Fehlerstromschutzschalter 1 weist Anschlussklemmen, insbesondere Schraubanschlussklemmen, zum Anschluss wenigstens eines ersten und eines zweiten Leiters 15, 16 eines elektrischen Versorgungsnetzes auf. Der dargestellte schematische Stromlaufplan zeigt eine Ausführungsform mit lediglich einem ersten und einem zweiten Leiter 15, 16. Es können jedoch Ausführungsformen mit jeder vorgebbaren Anzahl an Leitungen bzw. Leitern eines elektrischen Energieversorgungsnetzes vorgesehen sein, insbesondere Ausführungsformen mit drei oder vier Leitern, etwa zum Schutz eines an einem Drehstromnetz angeschlossenen Drehstromverbrauchers. Die weitere Beschreibung bezieht sich auf die dargestellte Ausführungsform mit einem ersten und einem zweiten Leiter 15, 16, wobei dies Ausführungsformen mit mehreren Leitern entsprechend äquivalent mit einschließt. In dem ersten und dem zweiten Leiter 15, 16 sind - nicht dargestellt - sog. Trennkontakte, daher Schaltkontakte, welche zum Auftrennen bzw. Unterbrechen des ersten bzw. zweiten Leiters 15, 16, sowie zum anschließenden Schließen, vorgesehen bzw. ausgebildet sind, angeordnet. Die beschriebenen und/oder in der Figur dargestellten Bauelemente bzw. Baugruppen sind zusammen in einem Isolierstoffgehäuse angeordnet, welches Durchbrechungen wenigstens für die Anschlussklemmen und einen manuell betätigbaren Handschalthebel zum manuellen Öffnen bzw. Schließen der Trennkontakte aufweist. Weiters kann vorgesehen sein, dass ein erfindungsgemäßer Fehlerstromschutzschalter 1 weitere - nicht dargestellte bzw. beschriebene - Baugruppen bzw. Bauteile umfasst, etwa eine Schaltstellungsanzeige, eine Auslöseanzeige und dergleichen.

Wie bereits angedacht ist ein erfindungsgemäßer Fehlerstromschutzschalter 1 vorzugsweise als netzspannungsunabhängiger Fehlerstromschutzschalter 1 ausgebildet. Die in einem derartigen netzspannungsunabhängigen Fehlerstromschutzschalter 1 zur Detektion eines Fehlerstromes und Auslösung des Fehlerstromschutzschalters 1, daher Trennen der Trennkontakte angeordneten Baugruppen beziehen deren zum Auslösen notwendige Energie vollständig aus dem Fehlerstrom bzw. dem zu diesem proportionalen Fehlerstromsignal in der Sekundärwicklung 17.

Ein erfindungsgemäßer Fehlerstromschutzschalter 1 weist - in an sich bekannter Weise - wenigstens einen Summenstromwandler 2 mit einem Wandlerkern, umfassend einen Magnetwerkstoff, auf, durch welchen der erste und zweite Leiter 15, 16 als Primärwicklung geführt sind. Es kann vorgesehen sein, den ersten und den zweiten Leiter 15, 16 lediglich durch eine im Wesentlichen zentrale Öffnung des Summenstromwandlers 2 zu führen, oder diese um den Wandlerkern herumzuwickeln. Auf dem Summenstromwandler 2 ist weiters eine Sekundärwicklung 17 zur Detektion eines Fehlerstromsignals angeordnet, wobei die Sekundärwicklung 17 schaltungstechnisch mit wenigstens einem Energiespeicherelement 5 wenigstens mittelbar verbunden ist, und das Energiespeicherelement 5 mit einem Auslöser 7 wenigstens mittelbar verbunden ist bzw. mit einem solchen zusammenwirkt, welcher bevorzugt als permanentmagnetisches Auslöserelais ausgebildet ist, wodurch eine besonders sichere und schnelle Ansprache des Fehlerstromschutzschalters 1 erreicht werden kann. Der Auslöser 7 wirkt mechanisch, vorzugsweise über ein nicht dargestelltes Schaltschloss, auf die Trennkontakte. Beim Auftreten eines gefährlichen Fehlerstromes, wird ein entsprechendes Fehlerstromsignal in der Sekundärwicklung 17 erzeugt, und der Auslöser 7 wirkt auf die Trennkontakte, welche geöffnet werden, und den ersten und zweiten Leiter 15, 16 durchtrennen.

Gemäß der besonders bevorzugten und in der einzelnen Figur dargestellten Ausführungsform eines erfindungsgemäßen Fehlerstromschutzschalters 1 ist vorgesehen, dass an die Sekundärwicklung 17 eine Gleichrichterschaltung 3 angeschlossen ist, welche vorzugsweise als Vollwellengleichrichter, insbesondere als Brückengleichrichter, ausgebildet ist, und dass die Gleichrichterschaltung 3 schaltungstechnisch mit dem Energiespeicherelement 5 verbunden ist, welches gemäß der dargestellten bevorzugten Ausführungsform als Kondensator 19 ausgebildet ist, wodurch ein einfacher Aufbau und ein schnelles Ansprechen des Energiespeicherelements 5 erreicht werden kann.

Erfindungsgemäß ist zu dem Energiespeicherelement 5 wenigstens ein Entladewiderstand 4 parallel geschaltet, welcher durch einen ersten Teilwiderstand 4a und wenigstens einen zweiten Teilwiderstand 4b gebildet ist, wobei der erste und der zweite Teilwiderstand 4a, 4b zueinander seriell geschaltet sind, wie dies auch in der einzigen Figur dargestellt ist. Durch den Entladewiderstand 4 wird sowohl die Entladen des Energiespeicherelements 5 nach einem Auftreten eines Fehlerstromes gewährleistet, als auch die Fehlerstromauslösecharakteristik des Fehlerstromschutzschalters 1 beeinflusst bzw. vorgegeben. Dadurch kann auf sehr einfache Weise ein Auslösegrenzwert vorgegeben bzw. eingestellt werden. Bei der bevorzugten Ausbildung des Energiespeicherelements 5 als Kondensator 19 und der bevorzugten Ausbildung des ersten und zweiten Teilwiderstands 4a, 4b als ohmsche Widerstände bilden diese zusammen einen Hochpass erster Ordnung, wodurch eine Erhöhung des Auslösegrenzwertes bei hochfrequenten Fehlerströmen erreicht werden kann. Dies ist vorteilhaft, da die Wirkung des elektrischen Stromes auf den menschlichen Körper zu höheren Frequenzen hin abnimmt. Durch entsprechende Dimensionierung dieses Hochpasses kann daher die Auslösecharakteristik an die Anforderungen des Personenschutzes angepasst werden, und Auslösungen des Fehlerstromschutzschalters 1 bei für den Menschen bzw. für Anlagen ungefährlichen Fehlerströmen verhindert werden. Die Wirkung elektrischer Ströme in Abhängigkeit der Frequenz sind dem Fachmann etwa aus der Veröffentlichung Prof. Biegelmeiers: "Wirkung von Wechselströmen höherer Frequenz, IEC-Report 479, 2. Auflage, 1986, Teil 2, Kapitel 4" bzw. Nachveröffentlicht in: "Wirkung des elektrischen Stromes auf Menschen und Nutztiere, VDE-Verlag 1986, ab Seite 169", bekannt. Die Dimensionierung eines Hochpasses, dessen Durchlassbereich wenigstens dieser Frequenzabhängigkeit genügt ist dem Fachmann auf dem Gebiet der Elektrotechnik geläufig.

Wie bereits dargelegt, wirkt das Energiespeicherelement 5 auf den Auslöser 7. Hiebei ist bevorzugt vorgesehen, dass das Energiespeicherelement 5 über eine zweite Schwellenwertschaltung 6 mit dem Auslöser 7 wirkverbunden ist, wobei der zweite Schwellenwertschalter 6 die Spannungsschwelle für das Auslösen des Auslösers 7 vorgibt. Ein Schwellenwertschalter kann etwa umfassend einer Zenerdiode bzw. als einfache Transistorschaltung realisiert werden.

Bevorzugt ist weiters vorgesehen, dass erfindungsgemäße Fehlerstromschutzschalter 1 weiters einen Prüfstromkreis zur Überprüfung der Funktionsfähigkeit und Betriebssicherheit des Fehlerstromschutzschalters 1 aufweisen. Der Prüfstromkreis weist dabei wenigstens einen Prüftaster und einen Prüfwiderstand auf, wobei durch Drücken des Prüftasters über den Prüfwiderstand, ein Fehlerstrom simuliert wird, welcher den Fehlerstromschutzschalter 1 dazu veranlassen soll auszulösen.

Erfindungsgemäße Fehlerstromschutzschalter 1 weisen wenigstens ein erstes elektrisches Signalmittel 20 auf, welches wenigstens mittelbar mit dem ersten Teilwiderstand 4a wirkverbunden ist. Bevorzugt ist hiebei bei einer besonders einfachen Ausführungsform der gegenständlichen Erfindung vorgesehen, dass das erste elektrische Signalmittel 20 schaltungstechnisch zu dem als ohmscher Widerstand ausgebildeten ersten Teilwiderstand 4a parallel geschaltet ist, und daher die am ersten Teilwiderstand 4a anliegende bzw. über diesen abfallende Spannung durch das elektrische Signalmittel 20 wenigstens qualitativ ausgegeben bzw. dargestellt wird. Der erste und zweite Teilwiderstand 4a, 4b bilden einen Spannungsteiler. Die am ersten Teilwiderstand 4a anliegende bzw. über den ersten Teilwiderstand 4a abfallende Teilspannung ist daher proportional zu der über den ersten und zweiten Teilwiderstand 4a, 4b abfallenden Gesamtspannung. Durch die Teilung des Entladewiderstands 4 in einen ersten und wenigstens einen zweiten Teilwiderstand 4a, 4b, und Abbildung der an dem ersten Teilwiderstand 4a abfallenden Spannung kann erreicht werden, dass eine Überbrückung des ersten Teilwiderstandes 4a, wie diese etwa bei einem schadhaften ersten Signalmittel 20 erfolgen kann, nicht zu einem Ausfall des Fehlerstromschutzschalters 1 führt, sondern eine Funktionalität im Rahmen der gesetzlichen Vorgaben erhalten bleibt. Hiezu sind der erste und der zweite Teilwiderstand 4a, 4b bevorzugt derart dimensioniert, dass etwa bei einer Überbrückung des ersten Teilwiderstandes 4a noch immer der geforderte Auslösefehlerstrom von beispielsweise 30mA bei einer Frequenz von 50Hz nicht überschritten wird. Dadurch kann eine erhöhte Sicherheit des Fehlerstromschutzschalters 1 erreicht werden, da dieser auch bei einem Bauteilausfall, wie dieser bei Einschatz des Fehlerstromschutzschalters in rauer Umweltumgebung und/oder außerhalb der spezifizierten Anwendungsfälle bzw. Umgebungsbedingungen, etwa bei Einsatz unter hohen Umgebungstemperaturen und/oder hohen Erschütterungen, gegeben sein kann, noch ein Mindestmaß an Schutz garantiert.

Bei einem elektrischen Signalmittel 20 kann es sich um jedes Mittel zur Erzeugung und Absetzung eines Signals nach Eingang eines vorgebbaren elektrischen Strom- und/oder Spannungssignals handeln, etwa um einen Lautsprecher, einen Summer, einen mechanischen Signalgeber, wie etwa ein Fähnchen, um ein extern angeordnetes Relais, eine Funkschnittstelle oder Ähnliches, wobei bevorzugt die Ausbildung des ersten elektrischen Signalmittels 20 als optisches elektrisches Signalmittel, vorzugsweise als erster elektrischer Leuchtkörper 8, vorgesehen ist.

Als erster elektrischer Leuchtkörper 8 kann jede Art eines Leuchtkörpers 8 vorgesehen sein, etwa Glühbirnen, Gasentladungslampen, Leuchtdioden 18 und/oder LCD-Displays, wobei gemäß der dargestellten besonders bevorzugten Ausführungsform die Ausbildung des ersten elektrischen Leuchtkörpers 8 als wenigstens eine Leuchtdiode 18 vorgesehen ist, wodurch sowohl eine hohe Leuchtkraft und somit ein starker Signalisierungseffekt, als auch ein geringer Stromverbrauch erreicht werden kann. Es kann gemäß einer besonders einfachen Ausgestaltung der gegenständlichen Erfindung vorgesehen sein, dass lediglich ein einziges Leuchtmittel 8 vorgesehen ist, und lediglich die Helligkeit, die Leuchtkraft bzw. die Größe des abgestrahlten Lichtstromes ein Maß für die Größe der an dem Energiespeicherelement 5 anliegenden Spannung, und somit ein Maß für die Größe des Fehlerstromes ist. Es kann auch vorgesehen sein eine vorgebbare Anzahl elektrischer Leuchtmittel 8 anzuordnen, wobei vorgesehen sein kann, diese vorgebbare Anzahl elektrischer Leuchtmittel 8 derart anzusteuern, dass die Anzahl der aufleuchtenden Leuchtmittel 8 ein Maß für die Größe des Fehlerstromes ist. Hiebei kann eine lineare Skalierung vorgesehen sein, oder aber die Wiedergabe eines Bitmusters, wodurch einfach eine sehr feine Wiedergabe unterschiedlicher Werte möglich ist. Es kann auch vorgesehen sein, eine vorgebbare Anzahl elektrischer Leuchtmittel 8 in Form eines alphanumerischen Displays anzuordnen, wobei einsprechende Mittel zur Ansteuerung eines derartigen Displays vorgesehen sind. Bei sämtlichen beschriebenen Ausbildungen der Anordnung erster elektrischer Leuchtmittel 8 kann jede der vorstehend beschriebenen Ausbildung des elektrischen Leuchtmittels 8 vorgesehen sein.

Je nach der verfügbaren Ausgangsleistung des vorgesehenen Summenstromwandlers 2 kann eine Verstärkung der Spannung des Energiespeicherelements 5 vorteilhaft sein. So ist gemäß einer besonders bevorzugten Ausführungsform der Erfindung eine Verstärkerschaltung 9 zum Verstärken der Spannung des Energiespeicherelements 5 vorgesehen. Durch die Verstärkerschaltung 9 kann die für die Ansteuerung des Leuchtkörpers 8 zur Verfügung stehende Leistung erhöht werden. Die Verstärkerschaltung 9 weist hiezu aktive verstärkende Bauelemente, wie etwa Transistoren, FET und/oder Bipolar, und/oder Operationsverstärker auf.

Zur Bereitstellung der Versorgungsspannung für die aktiven Bauelemente ist gemäß einer ersten bevorzugten Ausbildung der Verstärkerschaltung 9 ein Netzteil vorgesehen, welches vorzugsweise in die Baugruppe der Verstärkerschaltung 9 integriert ist, und welches schaltungstechnisch mit dem ersten und zweiten Leiter 15, 16 des zu schützenden Netzes verbunden ist, und derart die Energie zum Betrieb der Verstärkerschaltung 9 direkt aus dem zu schützenden Netz bezieht.

Sofern eine Verstärkerschaltung vorgesehen ist, ist wenigstens ein Verstärkereingang 11 einer Verstärkerschaltung 9 an das Energiespeicherelement 5 angeschlossen, und wenigstens ein Verstärkerausgang 12 der Verstärkerschaltung 9 wenigstens mittelbar mit dem ersten elektrischen Leuchtkörper 8 wirkverbunden, daher der Verstärkerausgang 12 ist entweder direkt mit dem Leuchtkörper 8 schaltungstechnisch verbunden, oder über eine weitere zwischengeschaltete Baugruppe. Die Bezeichnung Verstärkereingang 11 bzw. Verstärkerausgang 12 bezeichnet dabei vorzugsweise jeweils sämtliche für einen funktionsfähigen Verstärkereingang 11 bzw. Verstärkerausgang 12 notwendigen Kontakte bzw. Pole. Bei der dargestellten bevorzugten Ausführungsform weist der Verstärkereingang 11 bzw. Verstärkerausgang 12 jeweils zwei Kontakte bzw. Pole auf. Hiebei kann bei der Verarbeitung komplexerer Signale auch eine größere vorgebbare Anzahl an Kontakten bzw. Polen vorgesehen sein.

Um eine vorgebbare Regelung des Ansprechens des Leuchtkörpers 8 zu ermöglichen, ist gemäß der dargestellten bevorzugten Ausführungsform vorzugsweise vorgesehen, dass der wenigstens eine Verstärkerausgang 12 mit wenigstens einem Schwellenwertschaltungseingang 13 einer ersten Schwellenwertschaltung 10 schaltungstechnisch verbunden ist, und dass wenigstens ein Schwellenwertschaltungsausgang 14 der ersten Schwellenwertschaltung 10 mit dem ersten elektrischen Leuchtkörper 8 schaltungstechnisch verbunden ist. Die erste Schwellenwertschaltung 10 kann dabei derart ausgestaltet sein, dass eine Verstellbarkeit des Schwellwertes durch einen Benutzer möglich ist. Dadurch kann ein Grenzwert für die Aktivierung des Signalmittels 20 durch einen Benutzer vorgegeben werden.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Fehlerstromschutzschalter (1), umfassend wenigstens einen Summenstromwandler (2) durch welchen wenigstens ein erster Leiter (15) und ein zweiter Leiter (16) eines zu schützenden Netzes geführt sind, wobei auf dem Summenstromwandler (2) wenigstens eine Sekundärwicklung (17) angeordnet ist, wobei die Sekundärwicklung (17) mit wenigstens einem Energiespeicherelement (5) wenigstens mittelbar wirkverbunden ist, wobei wenigstens ein Entladewiderstand (4) zu dem Energiespeicherelement (5) parallel geschaltet ist, wobei der Fehlerstromschutzschalter (1) einen Auslöser (7) aufweist, welcher mit Trennkontakten in dem wenigstens einen ersten Leiter (15) und dem wenigstens einen zweiten Leiter (16) wirkverbunden ist, und dass der wenigstens eine Entladewiderstand (4) durch einen ersten Teilwiderstand (4a) und wenigstens einem zu diesem seriell geschalteten zweiten Teilwiderstand (4b) gebildet ist, **dadurch gekennzeichnet, dass** wenigstens ein erstes elektrisches Signalmittel (20) wenigstens mittelbar mit dem ersten Teilwiderstand (4a) wirkverbunden ist.

2. Fehlerstromschutzschalter (1) nach Anspruch 1, **dadurch gekennzeichnet, dass** das erste elektrische Signalmittel (20) wenigstens mittelbar zu dem ersten Teilwiderstand (4a) parallel geschalten ist.

3. Fehlerstromschutzschalter (1) nach Anspruch 1 oder 2, **dadurch gekennzeichnet, dass** das erste elektrische Signalmittel (20) als optisches elektrisches Signalmittel, vorzugsweise als erster elektrischer Leuchtkörper (8), ausgebildet ist.

4. Fehlerstromschutzschalter (1) nach Anspruch 3, wobei das erste elektrische Signalmittel (20) als erster elektrischer Leuchtkörper (8) ausgebildet ist, **dadurch gekennzeichnet, dass** der erste elektrische Leuchtkörper (8) als wenigstens eine Leuchtdiode (18) ausgebildet ist.

5. Fehlerstromschutzschalter (1) nach einem der Ansprüche 1 bis 4, **dadurch gekennzeichnet, dass** wenigstens ein Verstärkereingang (11) einer Verstärkerschaltung (9) an den ersten Teilwiderstand (4a) angeschlossen ist, und dass wenigstens ein Verstärkerausgang (12) der Verstärkerschaltung (9) wenigstens mittelbar mit dem ersten elektrischen Signalmittel (20) wirkverbunden ist.

6. Fehlerstromschutzschalter (1) nach Anspruch 5, **dadurch gekennzeichnet, dass** die Verstärkerschaltung (9) schaltungstechnisch mit dem ersten Leiter (15) und dem zweiten Leiter (16) verbunden ist.

7. Fehlerstromschutzschalter (1) nach Anspruch 5 oder 6, **dadurch gekennzeichnet, dass** der wenigstens eine Verstärkerausgang (12) mit wenigstens einem Schwellenwertschaltungseingang (13) einer ersten Schwellenwertschaltung (10) schaltungstechnisch verbunden ist, und dass wenigstens ein Schwellenwertschaltungsausgang (14) der ersten Schwellenwertschaltung (10) mit dem ersten elektrischen Signalmittel (20) schaltungstechnisch verbunden ist.

8. Fehlerstromschutzschalter (1) nach einem der Ansprüche 1 bis 7, **dadurch gekennzeichnet, dass** das Energiespeicherelement (5) als Kondensator (19) ausgebildet ist.

9. Fehlerstromschutzschalter (1) nach einem der Ansprüche 1 bis 8, **dadurch gekennzeichnet, dass** an die Sekundärwicklung (17) eine Gleichrichterschaltung (3) angeschlossen ist, und dass die Gleichrichterschaltung (3) schaltungstechnisch mit dem Energiespeicherelement (5) verbunden ist.

10. Fehlerstromschutzschalter (1) nach einem der Ansprüche 1 bis 9, **dadurch gekennzeichnet, dass** das Energiespeicherelement (5) über eine zweite Schwellenwertschaltung (6) mit dem Auslöser (7) wirkverbunden ist.

## Claims

1. Residual-current circuit breaker (1), comprising at least one summation current transformer (2) through which at least a first lead (15) and a second lead (16) of a network to be protected are guided, wherein at least one secondary winding (17) is arranged on the summation current transformer (2), wherein the secondary winding (17) is operatively connected, at least indirectly, with at least one energy storage element (5), wherein at least one discharging resistor (4) is switched in parallel with the energy storage element (5), wherein the residual-current circuit breaker (1) comprises a trip element (7) operatively connected with break contacts in the at least one first lead (15) and the at least one second lead (16), and the at least one discharging resistor (4) is formed of a first partial resistor (4a) and at least one second partial resistor (4b) switched in series with respect to the first partial resistor, **characterized in that** at least a first electric signalling device (20) is operatively connected, at least indirectly, with the first partial resistor (4a).

2. Residual-current circuit breaker (1) according to claim 1, **characterized in that** the first electric signalling device (20) is switched in parallel, at least indirectly, with the first partial resistor (4a).

3. Residual-current circuit breaker (1) according to claim 1 or 2, **characterized in that** the first electric signalling device (20) is an optical electric signalling device, preferably a first electric luminous element (8).

4. Residual-current circuit breaker (1) according to claim 3, wherein the first electric signalling device (20) is a first electric luminous element (8), **characterized in that** the first electric luminous element (8) is formed as at least one light emitting diode (18).

5. Residual-current circuit breaker (1) according to any of claims 1 to 4, **characterized in that** at least one amplifier input (11) of an amplifier circuit (9) is connected to the first partial resistor (4a), and at least one amplifier output (12) of the amplifier circuit (9) is operatively connected, at least indirectly, with the first electric signalling device (20).

6. Residual-current circuit breaker (1) according to claim 5, **characterized in that** the amplifier circuit (9) is interconnected with the first lead (15) and the second lead (16).

7. Residual-current circuit breaker (1) according to claim 5 or 6, **characterized in that** the at least one amplifier output (12) is interconnected with at least one threshold switching input (13) of a first threshold circuit (10), and at least one threshold switching output (14) of the first threshold circuit (10) is interconnected with the first electric signalling device (20).

8. Residual-current circuit breaker (1) according to any of claims 1 to 7, **characterized in that** the energy storage element (5) is constructed in the form of a capacitor (19).

9. Residual-current circuit breaker (1) according to any of claims 1 to 8, **characterized in that** a rectifier circuit (3) is connected to the secondary winding (17), and the rectifier circuit (3) is interconnected with the energy storage element (5).

10. Residual-current circuit breaker (1) according to any of claims 1 to 9, **characterized in that** the energy storage element (5) is operatively connected with the trip element (7) via a second threshold circuit (6).

## Revendications

1. Disjoncteur à courant de défaut (1), comprenant au moins un convertisseur de courant total (2) à travers lequel au moins un premier conducteur (15) et un deuxième conducteur (16) d'un réseau à protéger sont guidés, au moins un enroulement secondaire (17) étant agencé sur le convertisseur de courant total (2), l'enroulement secondaire (17) étant en liaison active, au moins indirectement, avec au moins un élément de stockage d'énergie (5), au moins une résistance de décharge (4) étant branchée en parallèle avec l'élément de stockage d'énergie (5), le disjoncteur à courant de défaut (1) comportant un déclencheur (7) qui est en liaison active avec des contacts de coupure dans l'au moins un premier conducteur (15) et dans l'au moins un deuxième conducteur (16) et l'au moins une résistance de décharge (4) étant formée par une première résistance partielle (4a) et par au moins une deuxième résistance partielle (4b) branchée en série avec la première, **caractérisé en ce qu'**au moins un premier moyen de signalisation électrique (20) est en liaison active au moins indirectement avec la première résistance partielle (4a).

2. Disjoncteur à courant de défaut (1) selon la revendication 1, **caractérisé en ce que** le premier moyen de signalisation électrique (20) est branché en parallèle au moins indirectement avec la première résistance partielle (4a).

3. Disjoncteur à courant de défaut (1) selon la revendication 1 ou 2, **caractérisé en ce que** le premier moyen de signalisation électrique (20) est conçu comme un moyen de signalisation électrique optique, de préférence comme un premier composant luminescent électrique (8).

4. Disjoncteur à courant de défaut (1) selon la revendication 3, le premier moyen de signalisation électrique (20) étant conçu comme un premier composant luminescent électrique (8), **caractérisé en ce que** le premier composant luminescent électrique (8) est conçu comme au moins une diode luminescente (18).

5. Disjoncteur à courant de défaut (1) selon l'une des revendications 1 à 4, **caractérisé en ce qu'**au moins une entrée d'amplificateur (11) d'un circuit amplificateur (9) est raccordée à la première résistance partielle (4a) et **en ce qu'**au moins une sortie d'amplificateur (12) du circuit amplificateur (9) est en liaison active au moins indirectement avec le premier moyen de signalisation électrique (20).

6. Disjoncteur à courant de défaut (1) selon la revendication 5, **caractérisé en ce que** le circuit amplificateur (9) est relié, du point de vue de la technique des circuits, au premier conducteur (15) et au deuxième conducteur (16).

7. Disjoncteur à courant de défaut (1) selon la revendication 5 ou 6, **caractérisé en ce que** l'au moins une sortie d'amplificateur (12) est reliée, du point de vue de la technique des circuits, à au moins une entrée de circuit à valeur de seuil (13) d'un premier circuit à valeur de seuil (10) et **en ce qu'**au moins une sortie de circuit à valeur de seuil (14) du premier circuit à valeur de seuil (10) est reliée, du point de vue de la technique des circuits, au premier moyen de signalisation électrique (20).

8. Disjoncteur à courant de défaut (1) selon l'une des revendications 1 à 7, **caractérisé en ce que** l'élément de stockage d'énergie (5) est conçu comme un condensateur (19).

9. Disjoncteur à courant de défaut (1) selon l'une des revendications 1 à 8, **caractérisé en ce qu'**un circuit redresseur (3) est raccordé à l'enroulement secondaire (17) et **en ce que** le circuit redresseur (3) est relié, du point de vue de la technique des circuits, à l'élément de stockage d'énergie (5).

10. Disjoncteur à courant de défaut (1) selon l'une des revendications 1 à 9, **caractérisé en ce que** l'élément de stockage d'énergie (5) est en liaison active avec le déclencheur (7) par l'intermédiaire d'un deuxième circuit à valeur de seuil (6).
